(19) Europäisches Patentamt

European Patent Office

Office européen des brevets

(11) **EP 1 081 020 B1**

(12) **EUROPÄISCHE PATENTSCHRIFT**

(45) Veröffentlichungstag und Bekanntmachung des Hinweises auf die Patenterteilung:
**24.03.2004 Patentblatt 2004/13**

(51) Int Cl.⁷: **B62D 13/00**

(21) Anmeldenummer: 00118480.3

(22) Anmeldetag: **25.08.2000**

(54) **Lenkvorrichtung für landwirtschaftliche Anhänger**

Steering device for agricultural trailer

Dispositif de direction pour remorque agricole

(84) Benannte Vertragsstaaten:
**AT BE CH CY DE DK ES FI FR GB GR IE IT LI LU MC NL PT SE**

(30) Priorität: **03.09.1999 DE 19942034**

(43) Veröffentlichungstag der Anmeldung:
**07.03.2001 Patentblatt 2001/10**

(73) Patentinhaber: **Müller-Elektronik GmbH & Co.
33154 Salzkotten (DE)**

(72) Erfinder:
• **Konrad, Helmut G.
33154 Salzkotten (DE)**
• **Bouquet, Yves
92110 Clichy (FR)**

(74) Vertreter: **Hanewinkel, Lorenz, Dipl.-Phys.
Patentanwalt
Ferrariweg 17a
33102 Paderborn (DE)**

(56) Entgegenhaltungen:
• **ESDERS H ET AL: "ENTWICKLUNGEN UND TENDENZEN DER HYDRAULIK IN TRAKTOREN UND LANDMASCHINEN" OLHYDRAULIK UND PNEUMATIK, KRAUSSKOPF VERLAG FUR WIRTSCHAFT GMBH. MAINZ, DE, Bd. 38, Nr. 4, 1. April 1994 (1994-04-01), Seiten 202-211, XP000454266 ISSN: 0341-2660**
• **PATENT ABSTRACTS OF JAPAN vol. 018, no. 128 (C-1174), 2. März 1994 (1994-03-02) -& JP 05 316807 A (SEIBUTSUKEI TOKUTEI SANGYO GIJUTSU KENKYU SUISHIN KIKO), 3. Dezember 1993 (1993-12-03)**

**Beschreibung**

Die Erfindung betrifft ein Verfahren zur Nachführung eines Anhängegerätes, das hinter einem Traktor mittels einer Knickdeichsel oder mit einer Achsschenkellenkdeichsel gelenkig an einem Zugmaul angehängt ist, wobei ein Deichselgelenk mit dem von einer Regelvorrichtung, der ein traktorseitiges Winkelmeßsignal und ein anhängerseitiges Winkelmeßsignal zugeführt sind, angesteuerten Aktor derart winkelstellend geregelt angesteuert wird, daß das Anhängegerät bei Kurvenfahrt möglichst exakt dem Traktor folgt.

In der Landwirtschaft werden zur Pflege der Ackerfrüchte zum überwiegenden Teil an eine Zugmaschine angehängte Geräte genutzt. Als Zugmaschine finden in der Regel Traktoren Verwendung, welche dem angehängten Gerät über Zapfwelle, Spannungsversorgung oder Hydraulikkreise Energie zur Verfügung stellen. Die vielfältige Energie wird genutzt, um die vielfältigen Aufgaben, wie Spritzen, Säen, Dünger verteilen, Schwad aufnehmen usw. durchzuführen.

Viele der angehängten Geräte werden im aufgelaufenen Bestand genutzt. Um den Bestand nicht zu zerstören, benutzen die Pflegekombinationen in der Regel Fahrgassen, die schon beim Säen in der richtigen Pflegebreite angelegt werden. Angehängte Geräte haben aber gewöhnlich den Nachteil, daß sie sich in Kurvenfahrten so verhalten, daß sie die Kurve abkürzen wollen und nicht im gleichen Radius wie die Zugmaschine laufen. Dieses wiederum zerstört den Bestand, der neben der Fahrgasse angepflanzt wurde und mindert den Ertrag des Landwirtes.

In ESDERS H. et al: "Entwicklungen und Tendenzen der Hydraulik in Traktoren und Landmaschinen", O+P Olhydraulik und Pnaumatik, Krausskopf Verlag für Wirtschaft GmbH, DE-Mainz, Bd. 38, Nr. 4, 1. April 1994 (1994-04-01), Seiten 202-211, XP000454266, ISSN: 0341-2660, ist beschrieben, daß an der eingangs bezeichneten Lenkvorrichtung Winkelmeßsignale von den Gelenken der Deichsel abgenommen werden, aus denen anhand von gespeicherten Erfahrungswerten ein Sollsignal für die Beaufschlagung des elektro-hydraulischen Stellgliedes so abgeleitet wird, daß eine möglichst genaue Spurfolge des Anhängers erreicht wird. Zum Ausgleich von Lenkfehlern am Hang kann manuell in den Regelprozeß eingegriffen werden. Bei Straßenfahrten wird der Regler verriegelt. Die Erstellung der Erfahrungswertedatei ist relativ aufwendig und muß für jede Gespannart neu erarbeitet werden. Mangels eines Wegsignales besteht kein eindentiger zusammenhang zwischen den gemessenen Winkeln und einem Sollwinkel.

Weiterhin ist aus der japanischen Patentschrift 04149966, "METHOD FOR STEERING AND CONTROLLING AGRICULTURAL TRACTION TYPE WORKING MACHINE", Inhaber: Seibutsukei Tokutei Sangyo Gijutsu Kenkyu Suishin Kiko, eine Achsschenkellenkvorrichtung bekannt, bei der am Anhängermaul ein Winkelmeßsignal abgenommen wird, aus dem ein Stellsignal für eine Lenkungseinstellung gewonnen wird, wodurch ein fiktiver Punkt, der auf der Traktormittellinie zwischen der Vorder- und Hinterradachse liegt, symmetrisch zur Hinterachse bezüglich eines gewählten Punktes auf der Verbindungslinie des Anhängermauls mit der Anhängerachsenmitte liegt. Die Nachlaufgenauigkeit ist fehlerbehaftet und geschwindigkeitsabhängig.

Aufgabe der Erfindung ist es, die eingangs bezeichneten Anordnungen so zu verbesern, daß verschiedenartige angehängte Geräte damit ohne die Erzeugung von Erfahrungswerten in engen Grenzen "in der Spur" der Zugmaschine gehalten werden können.

Die Lösung besteht darin, daß die Regelvorrichtung eingangsseitig mit mindestens einem Wegsignalgeber verbunden ist und aus dessen Wegsignal sowie den Winkelmeßsignalen jeweils ein Soll-Deichselgelenkwinkel für dessen geregelte Einstellung mit dem Aktor so errechnet wird, daß der jeweilige Schnittpunkt von einer Traktormittellinie und einer Anhängermittellinie als ein virtueller Anlenkpunkt jeweils, wenn sich diese auf einer Kreisbahn befinden, äquidistant zu Achsmittelpunkten einer Traktorachse und einer Anhängerachse geführt wird.

Vorteilhafte Ausgestaltungen sind in den Unteransprüchen angegeben. Eine Vorrichtung zur Durchführung des Verfahrens ist in den Ansprüchen 11 und 12 beansprucht.

Die Gesamtanordnung besteht aus einer Zugmaschine, einem angehängten Gerät, welches mit einer Knickdeichsel oder eine Achsschenkellenkung versehen ist, einer Vorrichtung zur Verstellung der Knickdeichsel oder der Achsschenkellenkung, einer Vorrichtung zur Steuerung dieser Verstellvorrichtung sowie Meßwertaufnehmern zur Messung des Zugmaulwinkels, des Knickwinkels oder Achsschenkelwinkels und zur Aufnahme der Winkelgeschwindigkeit des Zugfahrzeuges (Gyroscop) und ggf. eines Sensors zur Ermittlung der Neigung des gezogenen Fahrzeugs sowie eines Wegsensors.

Über die Sensoren erhält die Steuervorrichtung fortlaufend Eingangssignale, die es in Ausgangssignale zur Steuerung der Einstellung der Knickdeichsel bzw. der Achsschenkellenkung umsetzt. Bei den Eingangssignalen sind folgende Kombinationen denkbar, wenn zwei Sensoren genutzt werden.

erster Sensor zweiter Sensor
Messung Winkelgeschwindigkeit und Knickdeichselwinkel ($\beta$)
Messung Winkelgeschindigkeit und Achsschenkelwinkels ($\beta$)
Messung Winkels am Zugmaul($\alpha$) und Knickdeichselwinkels ($\beta$)
Messung Winkels am Zugmaul($\alpha$) und Knickdeichselwinkels ($\beta$)

Für die Ausgangssignale ist es unerheblich, ob damit die Achsschenkel oder die Knickdeichsel verstellt wird.

Auch ist es unerheblich, ob die aufgebrachte Kraft zur Verstellung über ein Hydrauliksystem, ein Pneumatiksystem oder elektromotorisch erfolgt.

Ein Sicherheitsbolzen vervollständigt die Anordnung. Er wird benutzt, um sie z.B. bei Straßenfahrten zu verriegeln.

Um zu den Meßwerten die entsprechenden Sollsignale zu ermitteln, wird folgende Implikationskette benutzt:

Aus dem Radius R des Kreises auf dem sich die Zugmaschine befindet, wird ein Gesamtwinkel $\gamma$ zwischen der Zugmaschine und dem gezogenen Gerät errechnet.

Aus dem Gesamtwinkel $\gamma$ wird die Stellung des Winkels $\alpha$, $\beta$ an dem Zugmaul der Zugmaschine sowie an der Knickdeichsel oder den Achsschenkeln ermittelt.

Laufend wird aus der Änderung des Radius R des Kreises, auf dem sich die Zugmaschine befindet, mit Hilfe einer Übertragungsfunktion die Änderung des Winkels $\beta$ an der Knickdeichsel oder den Achsschenkeln ermittelt. Die Übertragungsfunktion wird aus geometrischen Größen der Anordnung bestimmt. Dieses ist insbesondere wichtig für den möglichst spurgetreuen Übergang beim Hineinfahren in und Herausfahren aus einer Kurve.

Da sich der Gesamtwinkel $\gamma$ zwischen der Zugmaschine und dem gezogenen Gerät aber nur dann eindeutig bestimmten läßt, wenn der Anlenkpunkt fest ist, hier aber ein variabler "imaginärer" Anlenkpunkt eingeführt ist, wird durch ein Iterationsverfahren der Fehler bei der Berechnung beliebig klein gehalten.

Bei den nachfolgenden Berechnungen gilt folgende Notation

R: = Radius des Kreises, auf dem sich der Schnittpunkt zwischen der Mittelachse des ziehenden Fahrzeugs und seiner Hinterachse bewegt,

M: = Mittelpunkt des Kreises auf dem sich das ziehende Fahrzeug bewegt

ST: = Schnittpunkt der Mittelachse des ziehenden Fahrzeugs und seiner Hinterachse (Hinterachspunkt)

S2: = Schnittpunkt der Mittelachse des gezogenen Fahrzeuges und seiner Achse (Hängerachspunkt)

A: = Anlenkpunkt zwischen den beiden Fahrzeugen (virtuell)

$\alpha$ = Winkel zwischen der Mittelachse des ziehenden Fahrzeugs und der Deichsel D am Zugmaul Z

$\beta$ = Winkel zwischen der Knickdeichsel und der Mittelachse des gezogenen Fahrzeugs oder Winkel an den Achsschenkeln

$\gamma$ = Gesamtwinkel zwischen der Mittelachse des ziehenden Fahrzeugs und der Mittelachse des gezogenen Fahrzeugs oder zur gedachten Achse parallel zu den Achsschenkeln

LT: = Abstand zwischen dem Hinterachspunkt ST und dem Zugmaul Z -Zugmaulabstand-

LD: = der Knickdeichsel D

LS: = Abstand zwischen dem Hängeachspunkt S2 und dem Knickpunkt KP -(bei Achsschenkellung ist LS = 0)-

Bei den nachfolgenden Ausführungen wird fast immer davon ausgegangen, daß eine Knickdeichsellenkung vorhanden ist. Die Ausführungen haben aber auch für die Achsschenkellenkung Gültigkeit. Man setzt dafür einfach den Abstand LS von Hängerachspunkt S2 zum Knickpunkt KP als Null.

Bei äquidistantem Abstand zwischen den Hinterachspunkt ST und dem Anlenkpunkt A sowie dem Hängerachspunkt S2 und dem Anlenkpunkt A ist ersichtlich, daß sich beide Achspunkte auf dem gleichen Radius bewegen, was der spurgetreuen Nachführung des gezogenen Fahrzeugs entspricht.

Der Winkel $\gamma$, der sich zwischen dem gezogenen und dem ziehenden Fahrzeug nach einer Übergangszeit einstellt, unter der Voraussetzung, daß die Achspunkte ST, S2 äquidistant von dem Anlenkpunkt liegen, kann aus dem Radius R auf dem sich der Hinterachspunkt ST bewegt und der Länge a zwischen diesem und dem Anlenkpunkt A ermittelt werden.

$$\gamma = 2 \arctan \left( \frac{\alpha}{R} \right)$$

Bei der Konstellation handelt es sich nämlich um zwei rechtwinklige Dreiecke: M - S2 - A; M - ST - A

Wie gezeigt, folgt ein gezogenes Fahrzeug auf einem Kreis in der Spur des ziehenden genau dann, wenn der Anlenkpunkt äquidistant zwischen den beiden Fahrzeuge liegt, es stellt sich dann ein Gesamtwinkel $\gamma$ ein.

Mit Hilfe der Knickdeichsel werden deshalb an ihr die Winkel $\alpha$ und $\beta$ so verstellt, daß der Schnittpunkt der Verlängerungen der Mittelachsen der beiden Fahrzeuge genau äquidistant zu den beiden Fahrzeugen im imaginären Schnittpunkt A liegt.

Dieses ist genau dann erreicht, wenn LS + X = LT + y gilt, wobei

$$X = \text{Abstand A - KP}$$

$$Y = \text{Abstand A - Z}$$

$$(1) \quad x = LT - LS + y$$

oder

$$(1') \quad y = LS - LT + x$$

Bei weiteren Berechnungen werden LS, LT und LD als Maße aus der Geometrie des Systems und aus den Berechnungen des vorangegangenen Kapitels als bekannt vorausgesetzt.

Weiterhin gilt $\gamma' = 180° - \gamma$. Für Dreiecke allgemein gilt die Summe der Innenwinkel = 180°, also $\alpha + \beta + \gamma$; die Summe der Einzelwinkel ist der Gesamtwinkel.

Mit Hilfe der Projektionen x' und y' der Abstände x bzw. y auf die Deichsel D ergeben sich:

$$(2) \quad x' = x\cos\left(\frac{\gamma}{2}\right)$$

$$(2') \quad y' = y\cos\left(\frac{\gamma}{2}\right)$$

Desweiteren ist aus dieser Projektion ein Winkel $\delta$ abzuleiten.

$$(3) \quad x' + y' = LD \cdot \cos(\delta)$$

$\delta$ läßt sich aus bekannten Größen bestimmen. Mit dem Sinussatz gilt nämlich:

$$\frac{\sin\delta}{LS - LT} = \frac{\sin\left(\frac{\gamma}{2}\right)}{LD}$$

Nach $\delta$ ausgelöst ergibt sich:

$$(4) \quad \delta = \arcsin\left(\frac{LS - LT}{LD}\sin\left(\frac{\gamma}{2}\right)\right)$$

Aus (3) und (4) folgt dann

$$(3') \quad x' + y' = LD \cdot \cos\left(\arcsin\left(\frac{LS - LT}{LD}\sin\left(\frac{\gamma}{2}\right)\right)\right)$$

Durch Substituierung des Kosinausdruckes in (3') mit Hilfe einer Strukturkonstanten (K) und mit Hilfe von (2) und (2') läßt sich nun schreiben:

$$(5) \quad x \cdot \cos\left(\frac{\gamma}{2}\right) + y \cdot \cos\left(\frac{\gamma}{2}\right) = LD \cdot K$$

(5) und (1) sind zwei Gleichungen für die zwei Unbekannten, welche ergeben:

$$(LT - LS) \cdot \cos\left(\frac{\gamma}{2}\right) + 2y \cdot \cos\left(\frac{\gamma}{2}\right) = LD \cdot K$$

oder

$$(6) \quad y = \frac{LD \cdot K - (LS - LT) \cdot \cos\left(\frac{\gamma}{2}\right)}{2\cos\left(\frac{\gamma}{2}\right)}$$

und

$$(6') \quad x = \frac{LD \cdot K - (LS - LT) \cdot \cos\left(\frac{\gamma}{2}\right)}{2\cos\left(\frac{\gamma}{2}\right)}$$

Über die Sinussätze lassen sich nun auch die Winkel $\alpha$ und $\beta$ berechnen:

$$\alpha = \arcsin\left(\frac{x}{LD} \cdot \sin\gamma'\right)$$

$$\beta = \arcsin\left(\frac{\dot{y}}{LD} \cdot \sin \dot\gamma\right)$$

Somit läßt sich bei einer Bewegung des Traktors auf einem gegebenen Kreis jeweils bei gegebenen Abmessungen der Lenkerkomponenten LS, LT, LD, ein optimales Winkelpaar $\alpha$, $\beta$ bestimmen, bei dem die Spurtreue vorliegt.

Der Übergang von der Geradeausfahrt in eine Kurve erfordert eine gesonderte Betrachtung. Ist bei einer ungeregelten Anordnung die Tendenz, die Kurve "abzukürzen" zu beobachten, erkennt man bei den bekannten geregelten Anordnungen, daß sich beim Einfahren in eine Kurve eine Tendenz zum "weiter ausholen" einstellt, welche ebenso den Bestand gefährdet.

Während das Zugfahrzeug schon mit der Kurvenfahrt beginnt, wird in vorteilhafter Ausgestaltung der Erfindung das gezogene Fahrzeug noch so lange in der Geradeausfahrt gehalten, bis es an der Stelle angekommen ist, wo das Zugfahrzeug die Kurvenfahrt begann.

Desweiteren fährt erfindungsgemäß das gezogene Fahrzeug beim Übergang von der Kurvenfahrt in die Geradeausfahrt die Kurve erst zu Ende.

Mit Hilfe einer numerischen Simulation wird hier das gewünschte Verhalten für den Übergang des Winkels $\beta$ beim Einfahren und beim Ausfahren in einer Kurve nachgebildet.

Bezogen auf den Weg kann dieser Übergang sehr gut durch eine Polynom 2ten Grade approximiert werden:

$$\beta = f\,(s)\; hs^2 + is + j; \; h, i, j \text{ sind Parameter}$$

Um nun, wie in der Regelungstechnik allgemein üblich, aus dem Eingangssignal das Ausgangssignal zu ermitteln, wird die Übertragungsfunktion H(s) gesucht, welche für jede Änderung des Radius R(s), d.h. der wegabhängigen Radiusfunktion den Sollwinkel $\beta = f$(s) bestimmt.

$$(7) \qquad f(s) = R(s) \cdot \int H(s) ds$$

R(S) sei für diesen Zeitraum konstant R(s) = Rs. Damit ergibt sich

$$\int H(s) ds = \frac{hs2}{RS} + \frac{is}{RS} + \frac{j}{RS}$$

also

$$H(s) = \frac{2hs}{Rs} + \frac{i}{Rs}$$

mit

$$H(s) = 0 \qquad\qquad \text{für } s<0$$

$$H(s) = 2hs/Rs + i/Rs \qquad \text{für } 0<=s<=LS+LT+LD$$

$$H(s) = 0 \qquad\qquad \text{für } s>L+LD+LT$$

Es sind nun die Koeffizienten des Polynoms zu bestimmen.

Die Funktion muß den Zielwert $\beta$ aus den früheren Berechnungen erreichen, wenn das gezogene Fahrzeug an der Stelle angekommen ist, an der das ziehende Fahrzeug die Kurve begonnen hat.

$$(8) \qquad f(LT + LS + LD) = \frac{h(LT + LS + LD)2}{Rs} + \frac{i(LT + LS + LD)}{Rs} + \frac{j}{Rs} = \beta$$

Wenn das ziehende Fahrzeug in die Kurve fährt, dann bewegt sich der Anlenkpunkt des Zugmauls erst über die Linie der Geradeausfahrt hinaus in die entgegengesetzte Richtung, da er sich auf einem Kreis mit größerem Radius aber gleichem Mittelpunkt wie der Hinterachspunkt ST befindet. Dieser Punkt hat den von der Linie am weitesten entfernten Punkt erreicht, wenn er sich auf gleicher Höhe mit dem Punkt befindet, wo der Traktor die Kurvenfahrt begann. Das ist nach Durchfahren des Zugmaulabstandes LT der Fall. Da ein Maximum vorliegt, gilt:

$$(9) \qquad f(\text{LT}) = \frac{2hLT}{Rs} + \frac{i}{Rs} = 0$$

Ein Bezugssystem wird gewählt, bei dem der Funktionswert zum Startpunkt bei 0 liegt, so daß

$$(10) \qquad f(0) = \frac{j}{Rs} = 0$$

Bei j=0 dienen jetzt die 2 restlichen Gleichungen, die verbleibenden Unbekannten zu bestimmen. Aus (9) folgt sofort:

$$i = 2hLT$$

und damit für

$$h = \frac{Rs\beta}{(LT + LS + LD)^2 + 2LT(LT + LS + LD}$$

$$i = \frac{-2Rs\beta LT}{(LT + LS + LD)^2 + 2LT(LT + LS + LD)}$$

Werden nun nacheinander mehrere Lenkbewegungen ausgeführt, dann faßt man vorteilhaft die Radiusfunktion R(s) als Sprungänderung des Eingangssignals auf dem zweiten Änderungsort R(s) = Rs1 - Rs2 welche aber für den Weg LT+LS+LD, beginnend bei dem ersten Änderungsort S1 bzw. dem zweiten Änderungsort S2 wieder konstant gehalten wird. Die Zielwerte β können ebenfalls bestimmt werden: β = β1 - β2.
Die Berechnungen für die einzelnen Werte für β ergeben sich aus den vorigen Ausführungen. Damit gelten dann die obigen Berechnungen für die Koeffizienten auch für diese Betrachtungen. Die einzelnen Funktionen H1, H2,...Hn können also eindeutig bestimmt werden.

$$(11) \qquad f\text{ges}(s) = f1(s) + f2(s) + ... + fn(s) =$$

$$\frac{1}{R1} \cdot \int H1(s)\,ds + \cdot \frac{1}{R2} \cdot \int H2(s)\,ds + ... + \frac{1}{Rn} \cdot \int Hn(s)\,ds$$

Die Übertragungsfunktionen H1(s)...Hn(s) sind nur für die gestreckte Länge LT+LS+LD der Lenkerkomponenten definiert und liefern ab einer bestimmten Strecke nur noch Nullen, so daß die Integrale konstant bleiben und damit fges(s), was dem Zustand entspricht, daß keine Lenkbewegungen mehr ausgeführt werden. Das kann in Geradeausfahrt, aber auch in der konstanten Kurvenfahrt der Fall sein.
Faßt man die Radiusfunktion R(s) als Sprungänderung auf, dann ist auch ersichtlich, daß die Radiusfunktion R(s) negativ werden kann. Für die Übertragungsfunktion wird dann der Parameter h negativ, was einer Umkehrung der Parabel entspricht. Dieses kommt zum Tragen, wenn die Kurvenfahrt beendet wird und in die Geradeausfahrt gelenkt wird oder aber von der Geradeausfahrt in die andere Richtung gelenkt wird.
Oben wurde gezeigt, daß der Winkel γ von dem Abstand a des Hinterachsenpunktes ST vom Anlenkpunkt A abhängig ist und die Abstandskomponente y wiederum mit dem Winkel γ zusammenhängt. Für eine Berechnung eines jeweiligen Winkels y mit einem Mikroprozessor in einer akzeptablen Zeit, wobei der Fehler so klein wie praktisch zulässig sein soll, wird nachfolgend ein Iterationsverfahren angegeben.
Mit dem Startwert

$$(12) \quad y0 = \frac{LS + LD - LT}{2}$$

wird berechnet

$$y0 = 2 \arctan\left(\frac{LT + y0}{R}\right)$$

Der nächste Wert y1 wird dann nach der Formel (6) bestimmt:

$$(13) \quad y1 = \frac{LD - K(LT - LS) \cdot \cos\left(\frac{\gamma 0}{2}\right)}{2\cos\left(\frac{\gamma 0}{2}\right)}$$

Daraus wird dann $\gamma 1$ bestimmt und so weiter, bis die Abschätzung

$$|\gamma n - \gamma (n\text{-}1) \leq \varepsilon |$$

erfüllt ist, wobei s angemessen klein gewählt werden kann.

Untersuchungen mit bekannten Geometrien haben ergeben, daß nach dem ersten Iterationsschnitt der Fehler kleiner als ein Promille ist und der Funktionswert nach dem dritten Iterationsschritt keine signifikante Änderung mehr erfährt.

Im hängigen Gelände tendiert ein quer zum Hang oder schräg zum Hang gezogenes Fahrzeug leicht dazu, talwärts auszubrechen, was im Falle der gezogenen landwirtschaftlichen Fahrzeuge eine Zerstörung des Bestandes zur Folge hat. Lenkt man nun das angehängte Fahrzeug im geeigneten Maße berghoch, gleicht es diese talwärts gerichtete Tendenz wieder aus und das Fahrzeug bleibt in der Spur.

Mit Hilfe eines Neigungsmessers, welche die seitliche Neigung des gezogenen Fahrzeugs zur Erdanziehungskraft miß und damit ein Maß für die seitliche Neigung des befahrenen Hanges angibt, wird die Lenkung des angehängten Fahrzeug dergestalt verstellt, daß sich die talabwärts ziehenden Kräfte und die bergwärts gerichtete Lenkwirkung ausgleichen.

Die talwärts ziehende Kraftwirkung kann nur abgeschätzt und nicht direkt berechnet werden, da sie von Faktoren wie Gewicht, Gewichtsverteilung, Bodenbeschaffenheit und Bereifung abhängig ist. Deshalb wird dem Benutzer über eine Bedieneinrichtung die Möglichkeit gegeben, das Maß der korrigierenden Verstellung der Lenkung angemessen zu erhöhen oder zu mindern.

Die in den vorangegangenen Kapiteln vorgestellt Lenkstrategie und die die Hangfahrt verbessernde Lenkstrategie wirken vorzugsweise zugleich.

Der Benutzer erhält vorzugsweise die Möglichkeit, über verschiedene Regelstrategien ein- oder abzuschalten. Die Tasten dazu können an einem Multifunktionsgriff angeordnet sein. Dabei ist immer eine Möglichkeit gegeben, daß der Benutzer das Regelsystem übersteuert und damit auch die Regelung deaktiviert. Über eine besondere Sperre läßt sich ein Zustand einstellen, der eine Aktivierung der Regelung unmöglich macht. Der Benutzer wird vorzugsweise über einen Bildschirm über den Zustand der eingestellten Regelstratergien informiert. Desweiteren werden dort vorzugsweise Alarme angezeigt, die auf mögliche Gefahren bei einer extremen Geländeneigung oder extremen Lenkeinschlag sowie auf fehlerhafte Sensoren und Aktoren hinweisen.

Um den Radius des zu ziehenden Fahrzeuges unmittelbar eindeutig bestimmen zu können, wird auf diesem eine Gyroscope G installiert. Das Gyroscope gibt ein analoges Signal ab, welches direkt proportional zur Winkelgeschwindigkeit des Traktors in der Horizontalebene ist. Mit Hilfe der tatsächlichen Geschwindigkeit, welche über einen Wegsensor WS gewonnen wird, kann der jeweilige eingeschlagene Radius R ermittelt werden und somit als ein von den Deichselwinkeln $\alpha$, $\beta$ unabhängiges Eingangssignal für die Steuerung dienen.

Es gilt nämlich:

$$R(t) = \frac{v(t)}{\omega(t)}$$

Vorteilhafte Ausgestaltungen sind in den Unteransprüchen angegeben.

Fig. 1    zeigt eine Aufsicht auf ein Traktor-Hänger-Anordnung;

Fig. 2    zeigt eine geometrische Lenkungsschema;

Fig. 3    zeigt ein spurtreues idealisiertes Lenkungsschema;

Fig. 4    zeigt einen Fahrwegverlauf bei, sprunghafter Kurveneinfahrt;

Fig. 5    zeigt beispielhaft wegabhängig die Verläufe der Übertragungsfunktion und des Lenkerwinkels β zu Fig. 4.

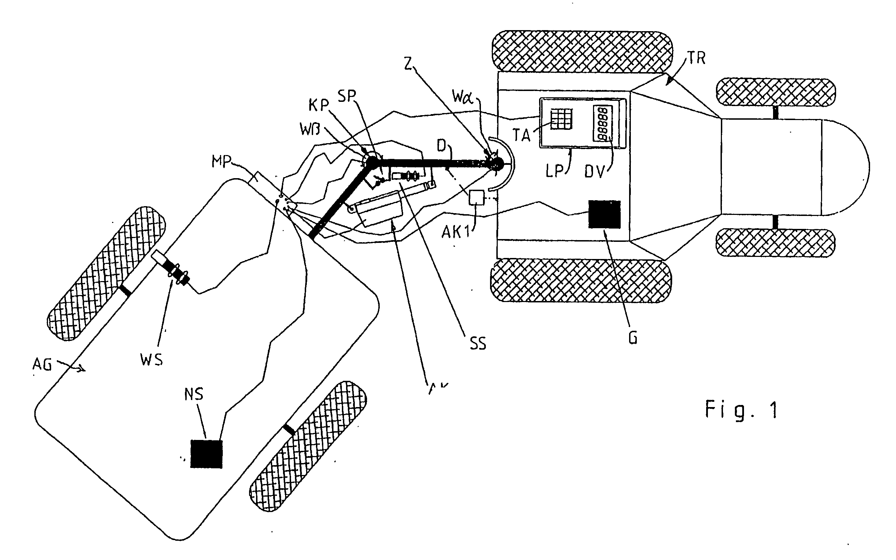

Figur 1 zeigt eine Aufsicht auf einen Traktor TR mit einem angehängten Anhängergerät AG gleicher Spurweite. An dem Traktor TR befindet sich ein Zugmaul Z, in das eine Knickdeichsel D eingehängt ist, die andererseits mit der festen Deichsel im Knickpunkt KP des Anhängergerätes verbunden ist.

Über das Gelenk im Knickpunkt KP ist ein Aktor AK gelegt, durch den der Knickwinkel einstellbar ist. Am Anhänger AG ist ein Mikroprozessor MP angeordnet, der mit mindestens einem Winkelsensor Wd am Zugmaul Z oder einem Winkelsensor Wβ am Knickpunkt eingangsseitig verbunden ist und mindestens mit einem zweiten Sensor G, einem Gyroscop auf dem Traktor TR verbunden ist, falls nur einer der beiden Winkelsensoren Wα, Wβ vorhanden ist, sowie mit mindestens einem Wegsensor WS, der vorzugsweise auf dem Anhänger AG angeordnet ist.

Ausgangsseitig steuert der Mikroprozessor MP den Aktor AK.

Aus dem Gyroscopsignal, das laufend die Änderung der Winkellage in der Horizontalebene angibt, und dem Weggebersignal wird der Kurvenradius laufend errechnet, der bei gelenkt eingeschlagenen Rädern des Traktors gefahren wird. Selbstverständlich können auch alle Räder gelenkt sein, da das Gyroscop davon unabhängig die Winkellagenänderung in der Horizontalebene mißt.

Die Lenkungsregelung arbeitet entweder mit dem so errechneten Bahnradius und einem Winkelsensormeßwert α, β oder mit diesen beiden und steuert abhängig von diesen Wertepaaren mit einem bestimmten Wegversatz den Aktor AK so an, daß der Anhänger AG möglichst dem Traktor TR auf der gleichen Spur folgt.

Da bei der Kurvenfahrt der Wegsensor WS außenliegend einen längeren Weg mißt als innenliegend wird das Wegsignal entsprechend dem Bahnradius der jeweiligen Anhängerbahn korrigiert oder aus den Wegsignalen zweier Wegsignalgeber die an den beiden Rädern angeordnet sind, gemittelt.

Das Knickpunktgelenk wird für die Straßenfahrt mit einer Sperre SP blockiert. Ein Sensor SS meldet die Blockade an den Prozessor MP, der den Aktor dann nicht ansteuert.

Als vorteilhafte Ergänzung ist auf dem Anhänger AG ein Seitenneigungssensor NS installiert, dessen Neigungssignal dem Mikroprozessor MP zugeführt ist, das als weitere Steuergröße zur Modifikation eines der gemessenen Winkelsensorwertes α, β dient.

Auf den Traktor TR ist ein Leitprozessor LP installiert, der mit einer Bedientastatur TA und einer Anzeigevorrichtung DV sowie mit dem Mikroprozessor MP verbunden ist.

Über die Tastatur TA werden dem Mikroprozessor MP vorab die geometrischen Daten der Lenkerkomponenten eingegeben und die Sensorbestückung mitgeteilt, so daß die universellen Gleichungen zur Ermittlung der Sollgröße für die Aktorbeaufschlagung jeweils errechnet werden können.

Während des Fahrvorganges sind über die Tastatur TA die Aktivierungen der Lenkungssteuerung zum Kurvenausgleich und ggf. zur Hangfahrtausgleich steuerbar. Vorzugsweise ist die Größe der Hangfahrtkomponenten im Regelkreis durch Tasteneingabe modifizierbar, wobei der Modifikator und der Status- und evtl. ein Alarm auf der Anzeigevorrichtung dargestellt werden.

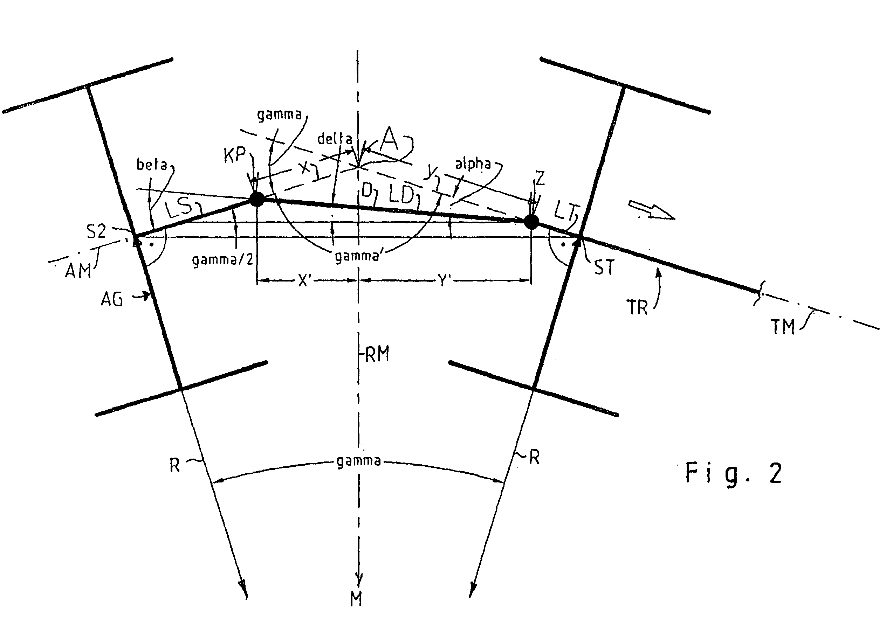

Figur 2 zeigt das Lenkschema mit den zuvor definierten geometrischen Größen. Die Mitte ST der Traktorachse hat zum Zugmaul Z den Abstand LT. Die Traktormittellinie TM erstreckt sich mit dem Abstand y bis zu dem virtuellen Anlenkpunkt A. Die Mitte der Anhängerachse S2 hat den Abstand LS vom Knickpunkt KP der Knickdeichsel D. Die feste Deichsel trifft um den Abstand x gedacht verlängert den Anlenkpunkt A.

Die Länge der Knickdeichsel D ist mit LD angegeben, so daß die Gesamtlänge der Lenkerkomponenten zwischen den Achspunkten ST, S2 sich aus den drei Längen LS + LD + Lt ergibt.

Befindet sich der Traktor TR gelenkt auf einer Kreisbahn mit dem Radius R, der sich von einem Mittelpunkt M bis zum Achspunkt ST erstreckt, so folgt der Anhänger AG auf dem gleichen Kreis, mit dem Radius R um den Mittelpunkt M, wenn der virtuelle Knickpunkt A auf der Mittellinie RM zwischen den Achspunkten ST, S2 liegt. An dem Zugmaul Z hat die Knickdeichsel D dann einen Winkel α zur Traktormittellinie TM, und zu dem Deichselknickpunkt KP hat die Knickdeichsel D einen Winkel $\beta$ zur Anhängermittellinie AG. Diese Winkel $\alpha$ und $\beta$ zusammen entsprechen dem Winkel $\gamma$, zwischen den beiden Radien R zu den Achspunkten ST, S2. Der Winkel $\gamma$ tritt auch zwischen den beiden Mittellinien TM, AM auf. Im übrigen sind die o.g. Gleichungsgrößen $\gamma$, $\gamma'$, $\delta$, x', y' eingezeichnet.

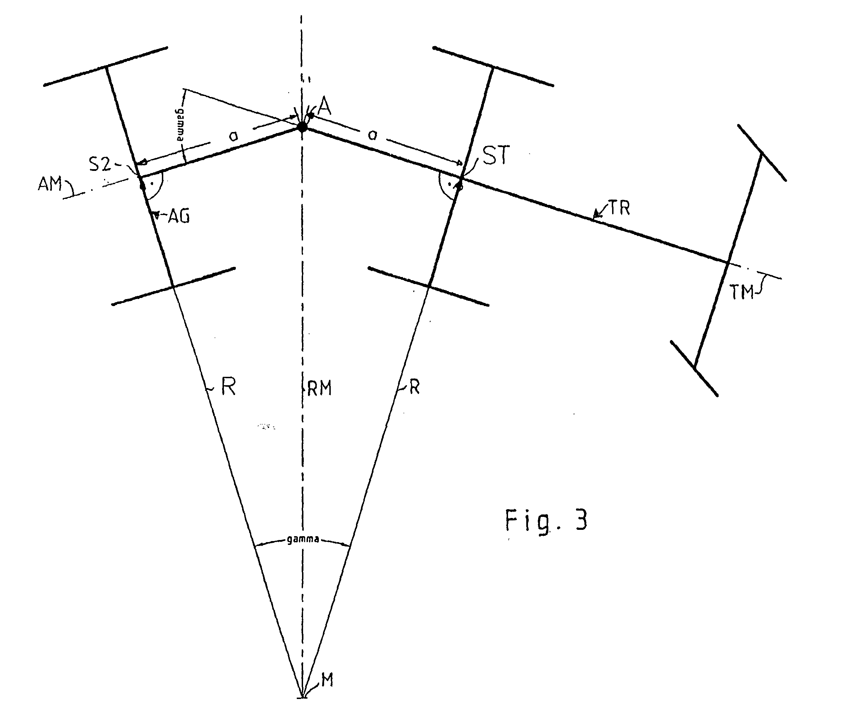

Fig. 3 verdeutlicht den Fall einer Kreisfahrt. Die beiden Abstände a des virtuellen Anlenkpunktes A zu den beiden Achspunkten ST, S2 sind gleich groß. Diese Figur trifft immer zu unabhängig davon, ob eine Knickdeichsel vorhanden ist oder die Anhängerräder eine Achsschenkellenkung haben und wie lang die einzelnen Lenkerkomponenten relativ sind.

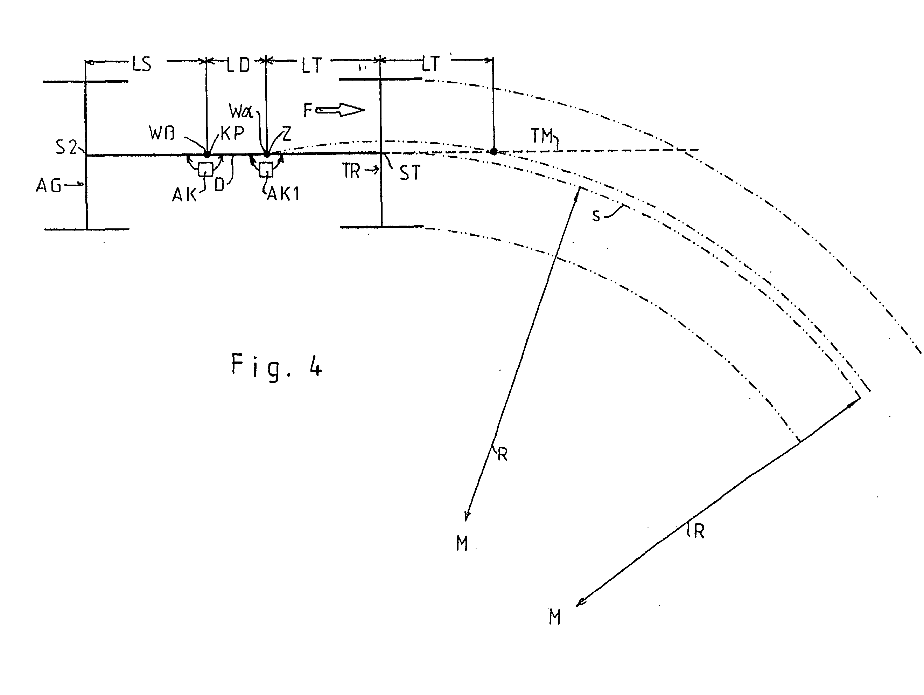

Fig. 4 zeigt ein Schema der Bahnen und Räder des Traktors TR und des Anhängers AG sowie der Achspunkte ST, S2 und des Zugmauls Z beim Einlauf in der Fahrtrichtung F in einen Kreisbogen.

Da sich das Zugmaul Z auf einen größeren Kreis als der Achspunkt ST zubewegt, muß der Aktor AK am Knickpunkt KP der den Knickdeichselwinkel $\beta$, der am Zugmaul Z ggf. vom anderen Winkelgeber W$\alpha$ gemessen wird, verändert. Statt an dem Knickpunkt KP kann ein Aktor AK am Zugmaul Z angeordnet sein, wobei der Winkel $\alpha$ jeweils geeignet eingestellt werden muß.

Der Aktor AK, AK1 wird jeweils in einem Regelkreis so angesteuert, daß der jeweils vom Mikroprozessor vorgegebene Sollwinkel $\alpha$, $\beta$ mit dem gemessenen Ist-Winkel $\alpha$, $\beta$ möglichst übereinstimmt. Der Aktor AK und der Winkelgeber der Regelstrecke müssen nicht am gleichen Gelenkpunkt Z, KP angeordnet sein.

Da es wie oben dargelegt zwischen dem jeweiligen Bahnradius R und den Winkeln $\alpha$ und $\beta$ eine eindeutigen Beziehung bei spurgetreuer Nachführung gibt, kann bei entsprechender Regelung eines der Lenkerwinkel $\alpha$, $\beta$ mit jeweils zwei dieser Größen R, $\alpha$, $\beta$ Sollwinkel errechnet werden. Ein Abschnitt der Bahn wird im weiteren Verlauf durch Summation von Teilabschnittsverläufen über eine Weglänge, die dem Abstand der Achspunkte ST, S2 entspricht, wie oben gezeigt, ständig ermittelt.

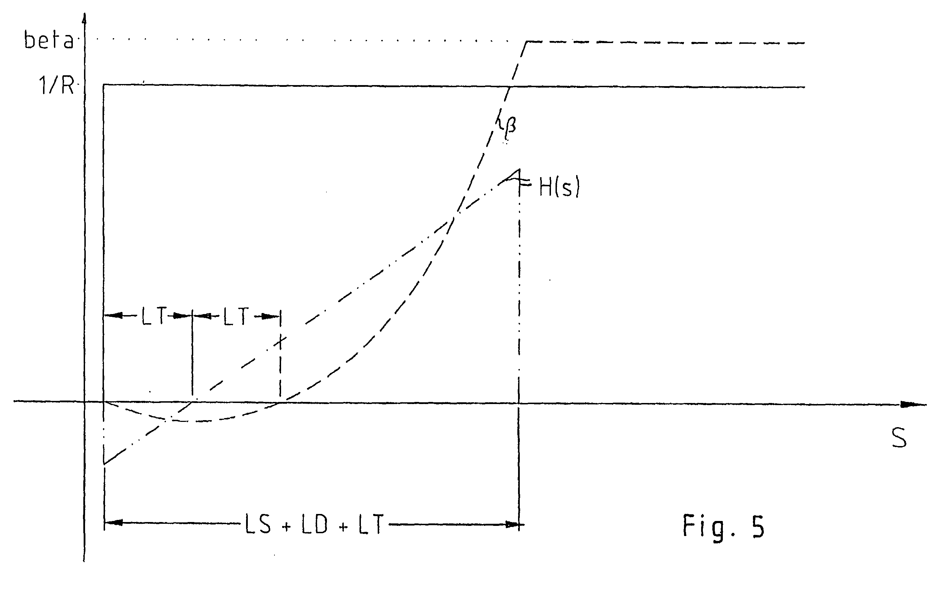

Fig. 5 veranschaulicht für den Einlauf in den Kreisbogen nach Fig. 4 den Verlauf der Übergangsfunktion Hcs über dem Fahrweg gemäß Gleichung (7) und des Sollwinkels $\beta$ gemäß Gleichungen (8) - (10), wobei der jeweilige Radius R(s) z.B. mittels einer Gyratormessung als bekannt angenommen ist.

Man sieht, daß der optimale Winkel $\beta$ die Richtung im Verlauf der Bahn wechselt, wobei ein Extremum dort liegt, wo das Zugmaul Z etwa die Ausgangslage des Traktorachspunktes s1 erreicht hat und der Winkel $\beta$ den Wert Null nach der doppelten Wegstrecke Lt hat. Danach steigt er zunehmend bis auf den Endwert an, der durch die Geometrie und den Kreisradius R bestimmt ist, was nach dem Erreichen des Kreisbogens durch die Anhängerachse eintritt.

Bei fortlaufender Änderung des Lenkeinschlages läßt sich eine weitere Verbesserung der Spurtreue erreichen, wenn jeweils die einzelnen Wegabschnitte mit den unterschiedlichen Radien nach Gleichung (11) überlagert aneindergereiht werden.

Hier ist der Winkel $\beta$ des Knickgelenkes betrachtet, da sich dieses Gelenk am besten für die Anbringung des Winkelsensors W$\beta$ und des Aktors AK eignet, da das Zugmaul Z gewöhnlich als eine Standardverbindung ausgebaut ist und so die meisten wesentlichen Reglerelemente fest auf dem Anhänger angeordnet werden können.

Die Anordnung eines Winkelgebers W$\alpha$ und eines Aktors AK1 am Traktor mit einer lösbaren Verbindung zur Knickdeichsel D wäre jedoch eine sinnvolle Alternative, da diese Elemente dann mehreren Anhängern verfügbar sein könnten. Da auch der Leitprozessor und ggf. der Gyrator auf dem Traktor angeordnet sind, ist es dann zweckmäßig, auch den Mikroprozessor dort anzuordnen oder diesen in den Leitprozessor zu integrieren. Ein entscheidender Vorteil des erfindungsgemäßen Verfahrens zur Lenkwinkelregelung mit optimaler Spurtreue ist darin begründet, daß es für alle Variationen der Anordnung und Ausbildung der Lenkerkomponenten geeignet ist und nur die wenigen geometrischen Daten und Anordnungsabgaben jeweils als Parameter eingespeist werden müssen. Es können also beliebige Kupplungsanordnungen und Lenkerlängen sowie verschiedene Sensoranordnungen oder Aktoranordnungen an den Prozessor angeschlossen werden, der das Verfahren durchführt. Die durchzuführenden Verfahrensschritte sind relativ einfach, und das angegebene Iterationsverfahren konvergiert schnell, so daß ein relativ kleiner, preiswerter Mikroprozessor oder vorhandene Rechenleistung eines vorhandenen Leitrechners genutzt werden kann.

**Patentansprüche**

1. Verfahren zur Nachführung eines Anhängegerätes (AG), das hinter einem Traktor (TR) mittels einer Knickdeichsel (D) oder mit einer Achsschenkellenkdeichsel gelenkig an einem Zugmaul (Z) angehängt ist, wobei ein Deichselgelenk (Z, KP) mit dem von einer Regelvorrichtung (MP), der ein traktorseitiges Winkelmeßsignal ($\alpha$, d$\gamma$) und ein anhängerseitiges Winkelmeßsignal ($\beta$) zugeführt sind, angesteuerten Aktor (AK, AK1) derart winkelstellend geregelt angesteuert wird, daß das Anhängegerät (AG) bei Kurvenfahrt möglichst exakt dem Traktor (TR) folgt, **dadurch gekennzeichnet, daß** die Regelvorrichtung (MP) eingangsseitig mit mindestens einem Wegsignalgeber (WS) verbunden ist und aus dessen Wegsignal (ds) sowie den Winkelmeßsignalen (d, $\beta$, d$\gamma$) jeweils ein Soll-Deichselgelenkwinkel ($\alpha$, $\beta$) für dessen geregelte Einstellung mit dem Aktor (AK, AK1) so errechnet wird, daß der jeweilige Schnittpunkt von einer Traktormittellinie (TM) und einer Anhängermittellinie (AM) als ein virtueller Anlenkpunkt (A) jeweils, wenn sich diese auf einer Kreisbahn befinden, äquidistant zu Achsmittelpunkten (ST, S2) einer Traktorachse und einer Anhängerachse geführt wird.

2. Verfahren nach Anspruch 1, **dadurch gekennzeichnet, daß** auf dem Traktor (TR) ein Gyroskop (G) mit seiner Achse senkrecht zum Boden angeordnet ist, dessen Winkelmeßsignal (dγ) der Regelvorrichtung (MP) zugeführt wird.

3. Verfahren nach einem der vorgenannten Ansprüche, **dadurch gekennzeichnet, daß** für die Berechnung des Soll-Deichselgelenkwinkels (α, β) jeweils Abstände (x, y) der Deichselgelenke (Z, KP) von dem virtuellen Anlenkpunkt (A) aus den Zusammenhängen der Lenkerkomponentengrößen, einer Deichsellänge (LD), einem Zugmaulabstand (LT) zum Traktorachsmittelpunkt (ST), einem Deichselknickpunktabstand (LS) zum Anhängerachsmittelpunkt (S2) sowie einem Achsenwinkel (γ) zwischen der Traktorachse und der Anhängerachse ermittelt werden (Gleichungen 6, 6').

4. Verfahren nach Anspruch 3, **dadurch gekennzeichnet, daß** jeweils der Abstand (y) des Deichselgelenkes (Z) von dem Anlenkpunkt (A) aus den Lenkerkomponentengrößen (LD, LT, LS) und dem Achsenwinkel (γ) durch eine Iterationsrechnung geeignet genau bestimmt wird (Gleichungen 12, 13).

5. Verfahren nach einem der vorstehenden Ansprüche, **dadurch gekennzeichnet, daß** auf einem Übergangsweg des Fahrweges von einer Geradeausfahrt in einen Kreisbogen laufend der Soll-Deichselgelenkwinkel (β) mittels einer solchen Übergangsfunktion (H(s)) aus den Lenkerkomponentengrößen (LD, LT, LS) und einem jeweiligen Kreisbogenradius (R) der Achsmittelpunkte (ST, S2) berechnet wird, die eine Geradeausfahrt des Anhängerachsmittelpunktes (S2) bis zum Eintrittspunkt des Traktorachsmittelpunktes (ST) in den Kreisbogen erbringt (Gleichungen (7) bis (10)) und auf einem Übergangsweg des Fahrweges aus einem Kreisbogen in einen Geradeausfahrweg mittels einer solchen Übergangsfunktion berechnet wird, die eine Kreisbogenfahrt des Anhängerachsmittelpunktes (S1) bis zu dem Austrittspunkt des Traktormittelpunktes (ST) aus dem Kreisbogen erbringt.

6. Verfahren nach Anspruch 5, **dadurch gekennzeichnet, daß** der jeweilige Kreisbogenradius (R) aus einem Winkeländerungssignal γ(t) des Gyroscops (G) und dem Weggebersignal (ds(t)) bestimmt wird.

7. Verfahren nach einem der vorstehenden Ansprüche, **dadurch gekennzeichnet, daß** jeweils in aufeinanderfolgend Wegpunkten (S1, S2), deren Wegabstand (ds) klein gegen den Abstand der Achsmittelpunkte (ST, S2) ist, die Änderung jeweils mindestens eines der Eingangssignale (α,β,ds,γ) bestimmt wird, wobei ein anderes über den Regelkreis mit den Aktor (AK, AK1) quasi fixiert ist, und darauf Wegabschnitt für Wegabschnitt eine Radiusfunktion (R(s)) zusammengestellt wird und dafür Abschnitt für Abschnitt jeweils mittels der Übergangsfunktion (H(S)) ein Anteil des Soll-Deichselgelenkwinkels (β) bezogen auf den relativen Fahrweg der Anhängerachsmittelpunktes (S1) bestimmt wird und diese superponiert den Soll-Deichselgelenkwinkel (β) ergeben (Gleichung (11).

8. Verfahren nach einem der vorstehenden Ansprüche, **dadurch gekennzeichnet, daß** der Wegsignalgeber (WS) an einem Rad des Anhängers (AG) angeordnet ist und dessen Wegsignale jeweils bezüglich eines aktuellen Bahnradius des Anhängerfahrweges korrigiert genutzt werden.

9. Verfahren nach einem der vorstehenden Ansprüche, **dadurch, gekennzeichnet, daß** an die Regelvorrichtung (MP) ein Neigungssensor (NS) angeschlossen ist, der die Neigung des Anhängers (AG) quer zur Fahrtrichtung mißt, dessen Neigungssignal derart bergaufgerichtet lenkend anteilig dem Soll-Deichselgelenkwinkel (β) zugeführt wird, daß eine hangbedingte Spurversatztendenz kompensiert wird.

10. Verfahren nach Anspruch 9, **dadurch gekennzeichnet, daß** das Signal des Neigungssensors gemäß einer Bedienereingabe in die Stellvorrichtung (MP) modifiziert wird.

11. Vorrichtung zur Durchführung des Verfahrens zur Nachführung eines Anhängegerätes (AG), das hinter einem Traktor (TR) mittels einer Knickdeichsel (D) oder mit einer Achsschenkellenkdeichsel gelenkig an einem Zugmaul (Z) angehängt ist, wobei ein Deichselgelenk (Z, KP) mit dem von einer Regelvorrichtung (MP), der ein traktorseitiges Winkelmeßsignal (α, dγ) und ein anhängerseitiges Winkelmeßsignal (β) zugeführt sind, angesteuerten Aktor (AK, AK1) derart winkelstellend geregelt angesteuert wird, daß das Anhängegerät (AG) bei Kurvenfahrt möglichst exakt dem Traktor (TR) folgt und wobei Eingabemittel (TA) für Reglervorgaben mit der Reglervorrichtung (MP), die weiter eine Anzeigevorrichtung (DV) ansteuert, auf der die jeweiligen Programmfunktionen und sicherheitsrelevante Informationen, wie das Auftreten des Sperrsignals anzuzeigen sind,

**dadurch gekennzeichnet, daß** die Regelvorrichtung (MP) aus einem Mikroprozessor besteht, der verfahrensmäßig nach einem der Ansprüche 1 - 10. programmiert ist und, ggf. über einen Leitprozessor (LP), mit einer Eingabetastatur (TA) zur Eingabe der Lenkerkomponentengrößen (LD, LT, LS), der jeweiligen Sensorbestückung und der jeweiligen Aktorgelenkzuordnung sowie zur Auswahl von Programmfunktionen verbunden ist.

12. Vorrichtung nach Anspruch 11, **dadurch gekennzeichnet, daß** die Regelvorrichtung (MP) eingangsseitig mit einem traktorseitig angeordneten Gyroskop (G), einem Wegsignalgeber (WS) und einem Neigungssensor (NS) verbunden ist.

## Claims

1. Method for tracking by a trailed implement (AG) which is flexibly coupled behind a tractor (TR) to a towing bit (Z) by means of a cranked drawbar (D) or by an Ackermann-type drawbar; the actuator (AK, AK1), which is triggered by a controlling device (MP) to which an angle measurement signal ($\alpha$, d$\gamma$) on the tractor side and an angle measurement signal ($\beta$) on the trailer side are sent, activates a drawbar joint (Z, KP), in a controlled manner which sets the angle, such that the trailed implement (AG) follows the tractor (TR) as exactly as possible in negotiating bends, **characterised in that** on the input side the controlling device (MP) is linked to at least one position transducer (WS) and from the latter's position signal (ds) and the angle measurement signals (d, $\beta$, d$\gamma$) a nominal drawbar joint angle ($\alpha$, $\beta$) for the controlled adjustment thereof with the actuator (AK, AK1) is calculated in such a way that the respective point of intersection of a tractor centre line (TM) and a trailer centre line (AM) as a virtual pivot point (A) whenever said lines are located on one orbit is led equidistantly to axle centres (ST, S2) of a tractor axle and of a trailer axle.

2. Method according to claim 1, **characterised in that** arranged on the tractor (TR), with its axle perpendicular to the ground, is a gyroscope (G) the angle measurement signal (d$\gamma$) from which is sent to the controller (MP).

3. Method according to either of the preceding claims, **characterised in that** calculating the nominal drawbar joint angle ($\alpha$, $\beta$) in each case involves determining distances (x, y) between the drawbar joints (Z, KP) and the virtual pivot point (A) from the relationships between the control arm component variables, a drawbar length (DL), a towing bit distance (LT) from the tractor axle's centre (ST), a drawbar articulation point distance (LS) from the trailer axle's centre (S2) and an axle angle ($\gamma$) between the tractor axle and the trailer axle (equations 6, 6').

4. Method according to claim 3, **characterised in that** the distance (y) in each case of the drawbar joint (Z) from the pivot point (A) is determined with suitable precision from the control arm component variables (LD, LT, LS) and the axle angle ($\gamma$) by iterative computation (equations 12, 13).

5. Method according to any of the preceding claims, **characterised in that** along a transitional stretch of the path travelled in a straight line running into an arc-of-circle the nominal drawbar joint angle ($\beta$) is computed from the control arm component variables (LD, LT, LS) and a respective arc-of-circle radius (R) of the axle centres (ST, S2) by means of a transition function (H(s)) that causes the trailer axle's centre (S2) to travel straight ahead as far as the point of entry of the tractor axle's centre (ST) into the arc-of-circle (equations (7) to (10)), and is computed along a transitional stretch of the path travelled from an arc-of-circle into a straight-ahead path by means of a transition function that causes the trailer axle's centre (S1) to travel in an arc-of-circle as far as the point of exit of the tractor axle's centre (ST) from the arc-of-circle.

6. Method according to claim 5, **characterised in that** the respective arc-of-circle radius (R) is determined from an angle change signal $\gamma(t)$ of the gyroscope (G) and the position transducer signal (ds(t)).

7. Method according to any of the preceding claims, **characterised in that** the change in each case to at least one of the input signals ($\alpha$, $\beta$, ds, $\gamma$) is determined respectively in consecutive waypoints (S1, S2) the interval between which (ds) is small compared to the distance between the axle centres (ST, S2), another input signal being virtually fixed via the control circuit with the actuator (AK, AK1), and thereupon path section by path section a radius function (R(s)) is assembled and accordingly section by section, in each case by means of the transition function (H(S)), a proportion of the nominal drawbar joint angle ($\beta$) based on the relative path travelled by the trailer axle's centre (S1) is determined, and these values superimposed give the nominal drawbar joint angle ($\beta$) (equation 11).

8. Method according to any of the preceding claims, **characterised in that** the position transducer (WS) is arranged

**EP 1 081 020 B1**

on one wheel of the trailer (AG) and the position signals thereof are in each case utilised after being corrected in relation to a current radius of the trailer's path.

**9.** Method according to any of the preceding claims, **characterised in that** linked to the controller (MP) is a tilt sensor (NS) which measures the tilt of the trailer (AG) at a right angle to the direction of travel, the tilt signal from which sensor is sent proportionally to the nominal drawbar joint angle (β) in a manner that steers the trailer in an uphill direction, such that any tendency for track misalignment due to a slope is compensated.

**10.** Method according to claim 9, **characterised in that** the signal from the tilt sensor is modified in accordance with an operator's input into the controller (MP).

**11.** System for implementing the method for tracking by a trailed implement (AG) which is flexibly coupled behind a tractor (TR) to a towing bit (Z) by means of a cranked drawbar (D) or by an Ackermann-type drawbar; the actuator (AK, AK1), which is triggered by a controlling device (MP) to which an angle measurement signal (α, dγ) on the tractor side and an angle measurement signal (β) on the trailer side are sent, activates a drawbar joint (Z, KP), in a controlled manner which sets the angle, such that the trailed implement (AG) follows the tractor (TR) as exactly as possible in negotiating bends; and there being provided means (TA) for inputting controller data with the controlling device (MP), which additionally activates a display (DV) upon which the relevant program functions and safety-relevant information such as appearance of the inhibiting signal are to be displayed,
**characterised in that** the controlling device (MP) comprises a microprocessor which is programmed in terms of the method according to any of claims 1 to 10, and, if appropriate via an executive processor (LP), is linked to an input pad (TA) for inputting the control arm component variables (LD, LT, LS), to the respective sensor instrumentation and to the respective actuator joint controls, as well as for program function selection.

**12.** System according to claim 11, **characterised in that** on the input side the controlling device (MP) is linked to a gyroscope (G) arranged on the tractor side, to a path signal transducer (WS) and to a tilt sensor (NS).

**Revendications**

**1.** Procédé pour le guidage d'une remorque (AG) qui est attelée, de maniere articulée, à une chape d'attelage (Z), à l'arrière d'un tracteur (TR), à l'aide d'un timon coudé (D) ou d'un timon directionnel à fusée, une articulation du timon (Z, KP) étant commandée par l'acteur (AK, AK1) qui est excité par un dispositif de réglage (MP) auquel sont conduits un signal de mesure d'angle côté tracteur (α,dγ) et un signal de mesure d'angle côté remorque (β), l'angle étant régulé de sorte que la remorque (AG) suive le tracteur (TR) aussi exactement que possible, lors de la prise de tournants,
**caractérisé en ce que**
le dispositif de réglage (MP) est relié, côté entrée, à un générateur de signaux de trajet (WS) et que, sur la base du signal (ds) de celui-ci, ainsi que des signaux de mesure d'angle (d, β, dγ), un angle de consigne de l'articulation du timon (α, β) est calculé, chaque fois, pour sa régulation par l'acteur (AK, AK1), de sorte que chaque point d'intersection d'une ligne médiane du tracteur (TM) et d'une ligne médiane de la remorque (AM) soit pris en considération en tant que point d'articulation virtuel (A) équidistant des points centraux (ST, S2) d'un axe du tracteur et d'un axe de la remorque.

**2.** Procédé selon la revendication 1,
**caractérisé en ce que**,
sur le tracteur (TR), est installé un gyroscope (G) dont l'axe est orienté perpendiculairement au sol et dont le signal de mesure d'angle (dγ) est conduit au dispositif de réglage (MP).

**3.** Dispositif selon l'une des revendications précédentes,
**caractérisé en ce que**,
pour le calcul de l'angle de consigne de l'articulation du timon (α, β), des distances (x, y) entre les articulations du timon (Z, KP) et le point d'articulation virtuel (A) sont déterminées, chaque fois, sur la base des relations de grandeurs des composantes de la direction, d'une longueur de timon (LD), d'une distance entre la chape (LT) et le point central de l'axe du tracteur (ST), par rapport à la distance entre le point du timon coudé (LS) et le point central de l'axe de la remorque (S2) ainsi que d'un angle d'axes (γ) entre l'axe du tracteur et l'axe de la remorque (équations 6, 6').

**4.** Procédé selon la revendication 3,
**caractérisé en ce que**
la distance (γ) entre l'articulation du timon (Z) et le point d'articulation (A) est déterminée exactement, de manière appropriée, sur la base des grandeurs des composantes de la direction (LD, LT, LS) et de l'angle d'axes (γ), selon la méthode de calcul d'itération (équations 12, 13).

**5.** Procédé selon l'une des revendications précédentes,
**caractérisé en ce que**,
sur un trajet de transition, lors du passage d'une voie droite à un tournant en arc de cercle, l'angle de consigne de l'articulation du timon (β) est calculé continuellement, à l'aide d'une telle fonction de transition (H(s)) qui, sur la base des grandeurs de composantes de la direction (LD, LT, LS) et d'un rayon d'arc de cercle respectif (R) des points centraux d'axes (ST, S2), donne un trajet en ligne droite du point central de l'axe de la remorque (S2) jusqu'au point d'entrée du point central de l'axe du tracteur (ST) dans l'arc de cercle (équations (7) à (10)), et est calculé sur un trajet de transition, lors du passage d'un arc de cercle à une voie droite, à l'aide d'une telle fonction de transition qui donne un trajet en arc de cercle du point central de l'axe de la remorque (S1) jusqu'au point de sortie du point central de l'axe du tracteur (ST) hors de l'arc de cercle.

**6.** Procédé selon la revendication 5,
**caractérisé en ce que**
le rayon d'arc de cercle ( R ) est déterminé, chaque fois, sur la base d'un signal de modification d'angle (γ(t)) du gyroscope (G) et du signal (ds(t)) du générateur de signaux.

**7.** Procédé selon l'une des revendications précédentes,
**caractérisé en ce que**,
chaque fois, dans des points de trajet successifs (S1, S2), dont l'écart (ds) est petit par rapport à l'écart des points centraux d'axes (ST, S2), la modification d'au moins l'un des signaux d'entrée (α, β, ds, γ) est déterminée, un autre étant quasi-fixé avec l'acteur (AK, AK1), par l'intermédiaire du circuit de réglage, et qu'ensuite, section de trajet par section de trajet, une fonction de rayon (R(s)) est composée et l'angle de consigne de l'articulation du timon (β) est proportionnellement déterminé, chaque fois, section par section, à l'aide de la fonction de transition (H(S)), en fonction du trajet relatif du point central de l'axe de la remorque (S1) et ceux-ci, superposés, donnent l'angle de consigne de l'articulation du timon (β) (équation (11)).

**8.** Dispositif selon l'une des revendications précédentes,
**caractérisé en ce que**
le générateur de signaux (WS) est disposé sur une roue de la remorque (AG) et que ses signaux sont utilisés chaque fois en étant corrigés en fonction du rayon réel de la voie.

**9.** Procédé selon l'une des revendications précédentes,
**caractérisé en ce que**,
au dispositif de réglage (MP) est raccordé un capteur d'inclinaison qui mesure l'inclinaison de la remorque (AG) transversalement par rapport au sens de marche, et dont le signal d'inclinaison, lors d'un guidage en montée, est ajouté proportionnellement à l'angle de consigne de l'articulation du timon (β) de sorte qu'une tendance au décalage du parallélisme, due à la pente, soit compensée.

**10.** Procédé selon la revendication 9,
**caractérisé en ce que**
le signal du capteur d'inclinaison est modifié conformément à une requête de l'opérateur, introduite dans un dispositif de réglage (MP).

**11.** Dispositif pour l'exécution du procédé pour le guidage d'une remorque (AG) qui est attelée, de manière articulée, à une chape d'attelage (Z), à l'arrière d'un tracteur (TR), à l'aide d'un timon coudé (D) ou d'un timon directionnel à fusée, une articulation du timon (Z, KP) étant commandée par l'acteur (AK, AK1) excité par un dispositif de réglage (MP) auquel sont conduits un signal de mesure d'angle côté tracteur (α,dγ) et un signal de mesure d'angle côté remorque (β), l'angle étant régulé de sorte que la remorque (AG) suive le tracteur (TR) aussi exactement que possible, lors de la prise de tournants, et des moyens d'introduction (TA) étant prévus pour les consignes de réglage avec le dispositif de réglage (MP), qui excite un dispositif d'affichage (DV), sur lequel les fonctions de programmes respectives et informations importantes au niveau de la sécurité, comme l'apparition du signal de blocage, sont affichées,

**caractérisé en ce que**
le dispositif de réglage (MP) consiste en un microprocesseur qui est programmé conformément au procédé selon l'une des revendications 1 à 10 et, le cas échéant, est raccordé, par l'intermédiaire d'un processeur conducteur (LP), à un clavier d'introduction (TA), pour l'introduction des grandeurs de composantes de la direction (LD, LT, LS), de l'équipement respectif en capteurs et de l'affectation respective de l'acteur, ainsi que pour la sélection de fonctions de programmes.

12. Dispositif selon la revendication 11.
**caractérisé en ce que**
le dispositif de réglage (MP) est relié, côté entrée, à un gyroscope (G), disposé côté tracteur, à un générateur de signaux (WS) et à un capteur d'inclinaison (NS).

Fig. 1

Fig. 2

Fig. 3

Fig. 4

EP 1 081 020 B1

EP 1 081 020 B1

Fig. 5

20